# EUROPÄISCHE PATENTSCHRIFT

(11) **EP 2 627 918 B1**
(45) Veröffentlichungstag und Bekanntmachung des Hinweises auf die Patenterteilung: **19.11.2014**
(21) Anmeldenummer: 11761527.8
(22) Anmeldetag: 24.08.2011
(51) Int. Cl.: F16B 31/02

(54) **SENSORANORDNUNG, BEISPIELSWEISE AN EINEM ANKERBOLZEN**
SENSOR ARRANGEMENT, FOR EXAMPLE ON AN ANCHOR BOLT
ENSEMBLE DE CAPTEUR, PAR EXEMPLE SUR UN BOULON D'ANCRAGE

(30) Priorität: 11.10.2010 DE 102010042263
(43) Veröffentlichungstag der Anmeldung: 21.08.2013
(73) Patentinhaber: HILTI Aktiengesellschaft, 9494 Schaan (LI)
(72) Erfinder: PAETOW, Matthias, 86899 Landsberg am Lech (DE); ECKSTEIN, Andreas, 86899 Landsberg am Lech (DE); GOLDT, Mathias, A-6800 Feldkirch (AT); SCHÄFFER, Marc, A-6800 Feldkirch (AT); DIJKHUIS, Arjen Detmer, A-6800 Feldkirch (AT); APPL, Jörg, 6800 Feldkirch (AT)
(74) Vertreter: Hilti Aktiengesellschaft Corporate Intellectual Property
(86) Internationale Anmeldenummer: PCT/EP2011/064510
(87) Internationale Veröffentlichungsnummer: WO 2012/048933

(56) Entgegenhaltungen:
- WO-A1-2007/070933
- DE-B4- 10 316 632

## Beschreibung

Die Erfindung betrifft eine Sensoranordnung, beispielsweise an einem Ankerbolzen, gemäss dem Oberbegriff des Anspruchs 1.

Eine solche Sensoranordnung ist aus der WO 2007/070933 A1 bekannt.

Beispielsweise aus der DE 103 16 632 B4 ist ein Schraubbolzen mit einer sogenannten lastanzeigenden Scheibe, auch "Direct Tension Indicator" (DTI) genannt, bekannt. Eine solche Scheibe weist Sensoren zur Kontrolle der am Schraubbolzen eingestellten Vorspannung auf, wobei die Sensoren durch Kapseln gebildet werden, die mit einem Farbstoff gefüllt sind. Der Farbstoff tritt bei einer vorgegebenen axialen Belastung aus der Scheibe aus und/oder wird am Rand der Scheibe sichtbar. Mittels der Sensoren kann somit das Erreichen der Sollvorspannung nachgewiesen werden, ohne dass es notwendig ist, das Montagedrehmoment zu erfassen.

Es hat sich jedoch gezeigt, dass lastanzeigende Scheiben unter Umständen nicht zuverlässig funktionieren, wenn sie an Betonankern eingesetzt werden.

**Aufgabe** der Erfindung ist es, eine besonders zuverlässige Sensoranordnung anzugeben.

Die Aufgabe wird erfindungsgemäss durch eine Sensoranordnung mit den Merkmalen des Anspruchs 1 gelöst. Bevorzugte Ausführungsbeispiele sind in den abhängigen Ansprüchen angegeben.

Bei der erfindungsgemässen Sensoranordnung ist im Bereich des Sensors zumindest ein Bypasselement mit einem dilatanten Material angeordnet, wobei über das dilatante Material des Bypasselements auf den Sensor einwirkende Stosskräfte ableitbar sind.

Die Erfindung beruht auf der Erkenntnis, dass die Schwierigkeiten, welche bei der Verwendung lastanzeigender Scheiben an Betonankern teilweise beobachtet wurden, auf das Einhämmern zurückzuführen sind, welches bei Betonankern regelmässig erforderlich ist. Beim Einhämmern wirken hohe Stosskräfte auf den Anker und damit auch auf die lastanzeigende Scheibe. Diese Stosskräfte können die farbstoffgefüllten Kapseln, welche als Sensoren dienen, beschädigen oder zumindest schwächen. Dies kann insbesondere zur Folge haben, dass der Farbstoff bereits vorzeitig austritt, so dass eine korrekte Kontrolle der Vorspannung beim Anziehen des Ankers nicht mehr möglich ist.

Hier setzt die Erfindung an und sieht zumindest ein Bypasselement vor, welches die beim Einhämmern auftretenden Stosskräfte zumindest teilweise ableitet, und damit den Sensor entlastet und schützt. Das Bypasselement weist dabei zumindest bereichsweise ein dilatantes Material auf, über welches die Stosskräfte abgeleitet werden. Ein solches dilatantes Material zeichnet sich dadurch aus, dass es einer Deformation widersteht, wenn eine Kraft über einen kurzen Zeitraum von z.B. weniger als 0.1 Sekunden angewandt wird, andererseits aber deformierbar ist, wenn die Kraft über einen längeren Zeitraum von beispielsweise mehr als 3 Sekunden angewandt wird. Damit kann das dilatante Material kurz andauernde Kräfte, wie sie bei Hammerschlägen auftreten, aufnehmen und am Sensor vorbeileiten, so dass der Sensor geschützt ist. Wirken die Kräfte hingegen über einen längeren Zeitraum, wie beispielsweise beim Vorspannen des Schraubbolzens, so gibt das dilatante Material nach, so dass die Kräfte nicht vom Bypasselement abgeleitet werden, sondern auf den Sensor wirken.

Erfindungsgemäss wird der Sensor somit vor Kraftspitzen geschützt, während länger andauernde Kräfte vom Sensor nachgewiesen werden können. Insbesondere ist es damit möglich, Betonanker mit lastanzeigender Scheibe einzuhämmern, ohne die lastanzeigende Scheibe bereits beim Einhämmern zu aktivieren, da das Bypasselement die beim Einhämmern auftretenden Stosskräfte an der Sensorscheibe vorbeileitet. Das Bypasselement und das dilatante Material sind somit zweckmässigerweise kräftemässig parallel geschaltet.

Grundsätzlich kann die Erfindung an beliebigen Sensoren zum Einsatz kommen, wobei unter einem Sensor jede Einrichtung verstanden werden kann, die eine Primärgrösse erfasst und in eine Ausgangsgrösse abbildet. Insbesondere kann es sich bei dem Sensor jedoch um die Farbkapsel einer lastanzeigenden Scheibe handeln, wobei in diesem Fall die Primärgrösse die axiale Last auf die Scheibe und die Ausgangsgrösse die Färbung ist. Mit der Erfindung können aber beispielsweise auch elektronische Sensoren geschützt werden, die elektronische Ausgangsgrössen liefern.

Besonders bevorzugt ist es, dass ein erstes Teil vorgesehen ist, an dem der Sensor angeordnet ist, und ein zweites Teil, welches relativ zum ersten Teil in einer Axialrichtung beweglich ist, wobei der Sensor und das dilatante Material in Axialrichtung gesehen zwischen den beiden Teilen angeordnet sind. Hierdurch wird eine besonders kompakte Anordnung erhalten. Da der Sensor und das dilatante Material benachbart und kräftemässig parallel angeordnet sind, kann das dilatante Material axial gerichtete Stösse aufnehmen und am Sensor vorbeileiten. Bei einer Anwendung an einem Schraubbolzen, insbesondere an einem Anker, kann vorgesehen sein, dass das erste Teil eine Unterlegscheibe und/oder das zweite Teil eine Schraubmutter ist.

Insbesondere ist es vorteilhaft, dass der Sensor an einer lastanzeigenden Scheibe ausgebildet ist und vorzugsweise durch zumindest eine Indikatorkapsel gebildet wird. In diesem Fall ist das erste Teil die lastanzeigende Scheibe.

Die Erfindung wird nachstehend anhand bevorzugter Ausführungsbeispiele näher erläutert. Es zeigen schematisch:
- Fig. 1: eine Querschnittsansicht eines ersten Ausführungsbeispiels einer erfindungsgemässen Sensoranordnung;
- Fig. 2: eine Querschnittsansicht eines zweiten Ausführungsbeispiels einer erfindungsgemässen Sensoranordnung an einem als Betonanker ausgebildeten Ankerbolzen; und
- Fig. 3: das Ausführungsbeispiel der Fig. 2 nach dem Aktivieren der lastanzeigenden Scheibe.

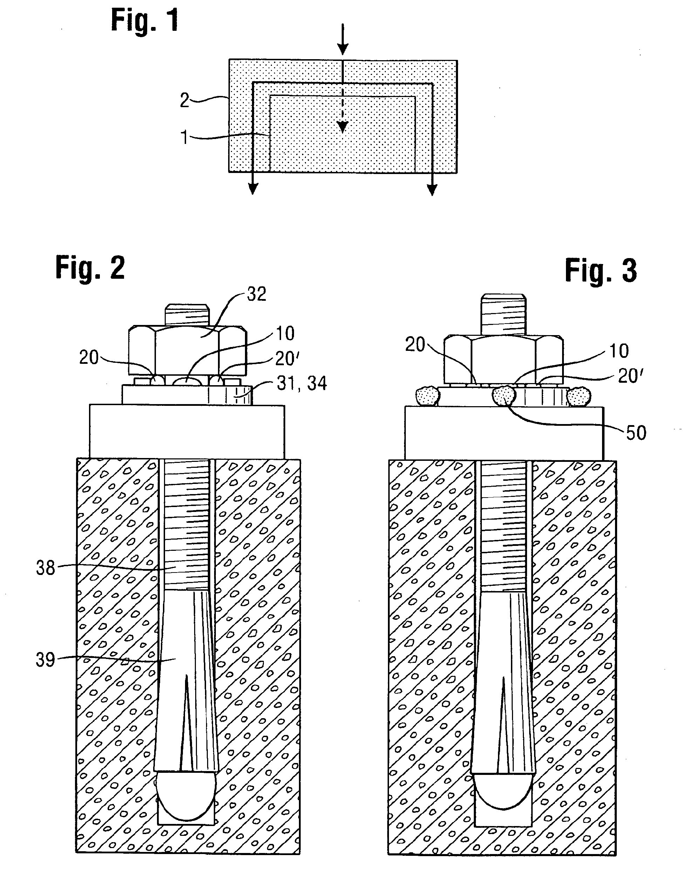

In Figur 1 ist ein erstes Ausführungsbeispiel einer erfindungsgemässen Sensoranordnung dargestellt. Die Anordnung weist einen Sensor 1 auf, der beispielsweise mechanisch, aber auch elektrisch ausgebildet sein kann. Ferner weist die Anordnung ein Bypasselement 2 auf, welches aus einem dilatanten Material besteht. In dieses Material ist der Sensor 1 eingebettet, wobei das dilatante Material sowohl an der Oberseite des Sensors 1 als auch zu dessen beiden Seiten verläuft. Wird nun auf die Sensoranordnung der Fig. 1 von oben ein Schlag ausgeübt, so wird die entsprechende Kraft, wie in Fig. 1 durch massive Pfeile angedeutet, vom dilatanten Material des Bypasselementes 2 aufgenommen und beiderseits des Sensors 1 abgeleitet. Der Sensor 1 hingegen wird nicht oder nur gering belastet.

Wirkt hingegen die Kraft von oben länger ein, so kann das dilatante Material deformiert werden, und die von oben wirkende Kraft kann, wie in Fig. 1 mit einem gestrichenen Pfeil dargestellt, auf den Sensor 1 wirken und von diesem erfasst werden. Der Sensor 1 kann also einerseits von oben wirkende Kräfte erfassen, sofern sie länger andauern, ist aber anderseits gegenüber kurz andauernden Stössen von oben durch das Bypasselement 2 geschützt.

In den Figuren 2 und 3 ist eine Anwendung einer erfindungsgemässen Sensoranordnung an einem als Betonanker ausgebildeten Ankerbolzen dargestellt. Der Ankerbolzen weist einen Schraubbolzen 38 auf, an dessen einem Endbereich ein an sich bekanntes Spreizelement 39 angeordnet ist. An seinem gegenüberliegenden Endbereich durchläuft der Schraubbolzen 38 eine Unterlegscheibe 31 und weist eine Schraubmutter 32 auf, die oberhalb der Unterlegscheibe 31 angeordnet ist.

An ihrer der Schraubmutter 32 zugewandten Seite weist die Unterlegscheibe 31 zumindest eine mit einem Farbstoff gefüllte Indikatorkapsel auf, die einen Kraftsensor 10 bildet. Wird beim Setzen des Ankerbolzens die Schraubmutter 32 angezogen, so kommt die Schraubmutter 32 am Sensor 10 zur Anlage. Wird die Schraubmutter 32 weiter angezogen, übt die Schraubmutter 32 eine immer grösser werdende, von oben wirkende Axialkraft auf den benachbarten Sensor 10 aus, welche der Vorspannung im Schraubbolzen 38 entspricht. Erreicht die Kraft auf den Sensor 10 schliesslich einen vorgegebenen Schwellenwert, so gibt ein mechanisches Element am Sensor 10 nach, und Farbstoff 50 kann, wie in Fig. 3 gezeigt, von der Indikatorkapsel seitlich aus der Unterlegscheibe 31 austreten. Dies kann als Indiz dafür herangezogen werden, dass eine gewünschte Sollspannung im Schraubbolzen 38 erreicht wurde. Die Unterlegscheibe 31 mit dem als Indikatorkapsel ausgebildeten Sensor 10 bilden somit eine lastanzeigende Scheibe 34.

Wie die Figuren 2 und 3 weiter zeigen, weist die Sensoranordnung überdies Bypasselemente 20, 20' auf, die aus einem dilatanten Material bestehen. Die Bypasselemente 20, 20' sind auf der Unterlegscheibe 31 neben dem Sensor 10 angeordnet. Ebenso wie der Sensor 10 befinden sich die Bypasselemente 20, 20' also zwischen Schraubmutter 32 und Unterlegscheibe 31, so dass eine von der Schraubmutter aufgebrachte Axialkraft sowohl auf den Sensor 10 als auch auf die Bypasselemente 20, 20' wirken kann.

Wird nun, beispielsweise beim Einschlagen des Ankerbolzens, ein Schlag auf den Schraubbolzen 38 und somit die Schraubmutter 32 ausgeübt, so wird dieser Schlag von der Schraubmutter 32 auf die Bypasselemente 20, 20' weitergegeben. Aufgrund der kurzfristigen Natur des Schlages werden die dilatanten Bypasselemente 20, 20' während des Schlages allenfalls unwesentlich verformt, so dass sie die Schlagkraft unmittelbar an die benachbarte Unterlegscheibe 31 weitergeben können. Die Schlagkraft wird somit von den Bypasselementen 20, 20' am Sensor 10 vorbeigeleitet. Wirkt die Axialkraft hingegen länger, wie beispielsweise beim Anziehen der Schraubmutter 32, so können sich die Bypasselemente 20, 20' deformieren, und die Axialkraft kann nun auf den Sensor 10 wirken, so dass der Sensor 10 diese Kraft aufnehmen und wie in Fig. 3 gezeigt nachweisen kann.

## Patentansprüche

1. Sensoranordnung, beispielsweise an einem Ankerbolzen,
mit zumindest einem Sensor (1, 10), wobei
im Bereich des Sensors (1, 10) zumindest ein Element mit einem dilatanten Material angeordnet ist, **dadurch gekennzeichnet, dass** das besagte Element ein Bypasselement (2,20) ist, wobei über das dilatante Material des Bypasselements (2, 20) auf den Sensor (1, 10) einwirkende Stosskräfte ableitbar sind.

2. Sensoranordnung nach Anspruch 1, **dadurch gekennzeichnet,**
**dass** ein erstes Teil (31) vorgesehen ist, an dem der Sensor (1, 10) angeordnet ist, und ein zweites Teil (32), welches relativ zum ersten Teil (31) in einer Axialrichtung beweglich ist, wobei der Sensor (1, 10) und das dilatante Material in Axialrichtung gesehen zwischen den beiden Teilen (31, 32) angeordnet sind.

3. Sensoranordnung nach Anspruch 2, **dadurch gekennzeichnet,**
**dass** das erste Teil eine Unterlegscheibe (31) und das zweite Teil eine Schraubmutter (32) ist.

4. Sensoranordnung nach einem der vorstehenden Ansprüche, **dadurch gekennzeichnet, dass** der Sensor (1, 10) an einer lastanzeigenden Scheibe (34) ausgebildet ist und insbesondere durch zumindest eine Indikatorkapsel gebildet wird.

## Claims

1. Sensor arrangement, for example on an anchor bolt,
comprising at least one sensor (1, 10), at least one element having a dilatant material being arranged in the region of the sensor (1, 10), **characterised in that**
said element is a bypass element (2, 20), impact forces acting on the sensor (1, 10) being able to be dissipated via the dilatant material of the bypass element (2, 20).

2. Sensor arrangement according to Claim 1, **characterised in that** there is provided a first part (31) on which the sensor (1, 10) is arranged, and a second part (32) which is movable in an axial direction relative to the first part (31), the sensor (1, 10) and the dilatant material being arranged between the two parts (31, 32), viewed in the axial direction.

3. Sensor arrangement according to Claim 2, **characterised in that** the first part is a plain washer (31) and the second part is a screw nut (32).

4. Sensor arrangement according to any one of the preceding claims, **characterised in that**
the sensor (1, 10) is configured on a load-indicating washer (34) and, in particular, is formed by a at least one indicator capsule.

## Revendications

1. Ensemble capteur, par exemple, sur un boulon d'ancrage,
comprenant au moins un capteur (1, 10), au moins un élément comprenant un matériau de dilatation étant agencé dans la région du capteur (1, 10), **caractérisé en ce**
**que** ledit élément est un élément de dérivation (2, 20), des forces de poussée pouvant être dérivées, agissant sur le capteur (1, 10), par l'intermédiaire du matériau de dilatation de l'élément de dérivation (2, 20).

2. Ensemble capteur selon la revendication 1, **caractérisé en ce**
**qu'**une première partie (31), sur laquelle est disposé le capteur (1, 10), et une seconde partie (32), qui est mobile dans une direction axiale par rapport à la première partie (31), sont prévues, le capteur (1, 10) et le matériau de dilatation étant disposés entre les deux parties (31, 32), vu en direction axiale.

3. Ensemble capteur selon la revendication 2, **caractérisé en ce**
**que** la première partie est une rondelle antifriction (31) et que la seconde partie est un écrou de vissage (32).

4. Ensemble capteur selon l'une des revendications précédentes, **caractérisé en ce**
**que** le capteur (1, 10) est conçu sur un disque indicateur de charge (34) et est en particulier formé par au moins une capsule d'indicateur.
